# EUROPEAN PATENT SPECIFICATION

(11) **EP 3 600 748 B1**
(45) Date of publication and mention of the grant of the patent: **28.04.2021**
(21) Application number: 18719299.2
(22) Date of filing: 29.03.2018
(51) Int. Cl.: B23K 9/12, B23K 9/133, B23K 9/167

(54) **TOUCH RETRACT TIG ARC WELDING TORCH AND METHOD OF USING A TOUCH RETRACT TIG ARC WELDING TORCH TO WELD A WORK PIECE**
BEIM KONTAKT EINZIEHBARER WIG-SCHWEISSBRENNER UND VERFAREN ZUM VERWENDEN EINES BEIM KONTAKT EINZIEHBAREN WIG-SCHWEISSBRENNERS ZUM SCHWEISSEN EINES WERKSTÜCKES
TORCHE DE SOUDAGE TIG À RÉTRACTION PAR CONTACT ET MÉTHODE D'UTILISATION D'UNE TORCHE DE SOUDAGE TIG À RÉTRACTION PAR CONTACT POUR SOUDER UNE PIÈCE

(30) Priority: 31.03.2017 GB 201705253
(43) Date of publication of application: 05.02.2020
(73) Proprietor: AMADA WELD TECH UK LTD, Mildenhall IP28 7RD (GB)
(72) Inventor: AHERNE, Mark, Manningtree CO11 1PH (GB); SZPIECH, Mariusz, Thetford IP24 2YA (GB)
(74) Representative: Dummett Copp LLP
(86) International application number: PCT/IB2018/052202
(87) International publication number: WO 2018/178934

(56) References cited:
- EP-A2- 0 140 694
- US-A- 2 628 302
- US-A- 3 431 387
- US-A- 3 446 935
- US-A1- 2011 031 224

## Description

### BACKGROUND

### a. Field of the Invention

This invention relates to an apparatus and method for use in welding, in particular to a touch retract tungsten inert gas (TIG) arc welding torch and a method of using a touch retract tungsten inert gas (TIG) arc welding torch, see claims 1 and 10.

TIG welding, also known as Gas Tungsten Arc Welding (GTAW), is an arc welding process that uses a non-consumable tungsten electrode to produce a weld arc. Non-consumable meaning the electrode does not form part of the bonding material. Even with a non-consumed electrode process a very small amount of the electrode is lost each time an arc is struck. Eventually the electrode will need to be replaced. The weld area is often protected from atmospheric contamination by an inert shielding gas (such as argon or helium). A power supply produces electrical energy, which is conducted across an arc to create a weld.

### b. Related Art

In known process controlled TIG welding systems the electrode is at a set distance from the workpiece, a very short period, high voltage pulse is applied to start the arc, an auxiliary low voltage current is applied for a short time, and then the main weld current is applied via the resulting arc.

In order to overcome the electrical disadvantages associated with a high voltage arc start system which can lead to the possibility of the electrode arcing to the current return nozzle or associated parts of the assembly not to be welded, a touch retract torch may be used.

In touch retract systems a low voltage circuit is completed and the electrode immediately retracts drawing a high current arc between the electrode tip and the workpiece. When a preset gap is reached the retraction ceases and the weld of energy has been transferred or the electrode has moved so far away the arc fails Disadvantages of known touch retract systems include the fact that it is difficult to locate the electrode on the weld site due to the fact that it is generally concealed by a contact tube/current return electrode. As the electrode wears the gap created when the electrode is retracted increases and hence changes the characteristics of the weld created. These disadvantages are presently overcome by the use of complex and expensive positional servo systems whereas this invention provides a simple low cost solution to these disadvantages.

US-A-2 628 302 (base of the preamble of claims 1 and 10) discloses an arc welding apparatus having an electrode that is gripped in an electrode holder with an end of the electrode being recessed within a nozzle. An end of the nozzle is held against a work piece, and the electrode holder is advanced to bring the electrode end into contact with the work piece by pulling a main trigger. A brief interval after the electrode touches the work piece, a current is established through the electrode and a retraction mechanism automatically retracts the electrode holder to a retracted position to establish the arc. When the electrode becomes shortened such that that the arc gap is undesirably increased in length, an auxiliary trigger, separate from the main trigger, is used to manually adjust the position of the electrode end relative to the electrode holder. To make this adjustment, a chuck within the electrode holder is first manually loosened by turning a chuck operating nut in order to release the grip on the electrode. The nozzle is then brought up against a surface in a vertical orientation such that the electrode then falls under gravity to make contact with the surface. The auxiliary trigger is used to reset the distance between the electrode holder and the electrode end and the chuck then manually tightened to fix the position of the electrode end with respect to the electrode holder, and the auxiliary trigger is then released.

### SUMMARY OF THE INVENTION

According to the present invention, a touch retract tungsten inert gas (TIG) arc welding torch is defined in claim 1.

In a preferred embodiment, the mechanical retraction mechanism further comprises: a piston through which the electrode extends; and in which the gripper arms are pivotally attached to an end of the piston such that rotation of the gripper arms about a pivot point cause the gripper arms to engage and clamp the electrode.

Preferably, the piston is resiliently attached to a piston lock and in which the piston lock remains stationery as the gripper arms pivot and retract the piston together with the gripper arms, thus increasing the frictional force between the gripper arms and the electrode.

The mechanical retraction mechanism may further comprise a swing arm connected to an end of each of the gripper arms and resiliently connected to the activating means and in which the activating means triggers the retraction mechanism by pivoting the swing arm from an unengaged position to an engaged position causing the gripper arms to pivot and engage the electrode; and in which further pivoting of the swing arm retracts the piston together with the gripper arms and hence the electrode.

The welding torch may further comprise a return spring arranged to return the swing arm to the unengaged position.

Preferably a stop prevents the piston from retracting beyond the predetermined distance.

The activating means may be a solenoid, a linear motion actuator, a pneumatic or hydraulic cylinder actuator.

Further according to the present invention, a method of using a touch retract tungsten inert gas (TIG) arc welding torch to weld a work piece is defined in claim 10.

### BRIEF DESCRIPTION OF THE DRAWINGS

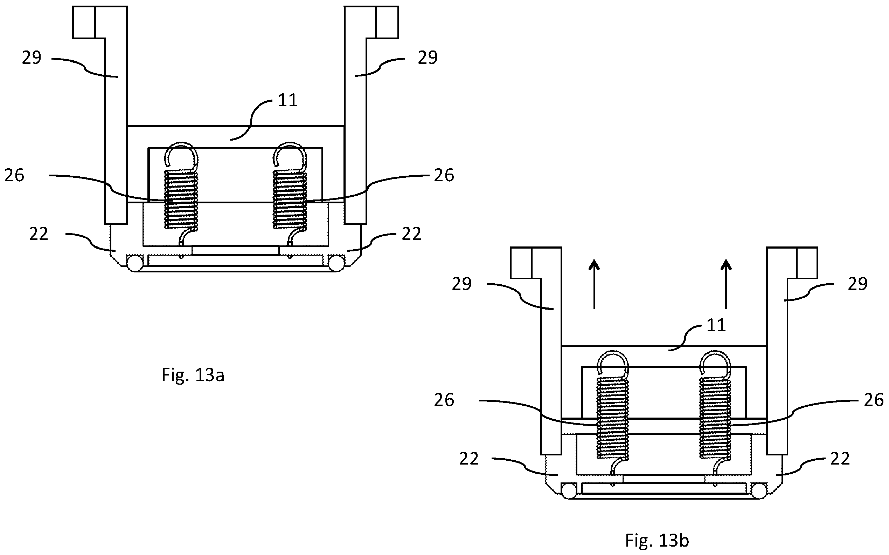

The invention will now be described by way of example only, with reference to the Figures 13a and 13b shown a piston and piston lock and piston spring only in the open/relaxed and closed/gripping configuration.

### DETAILED DESCRIPTION

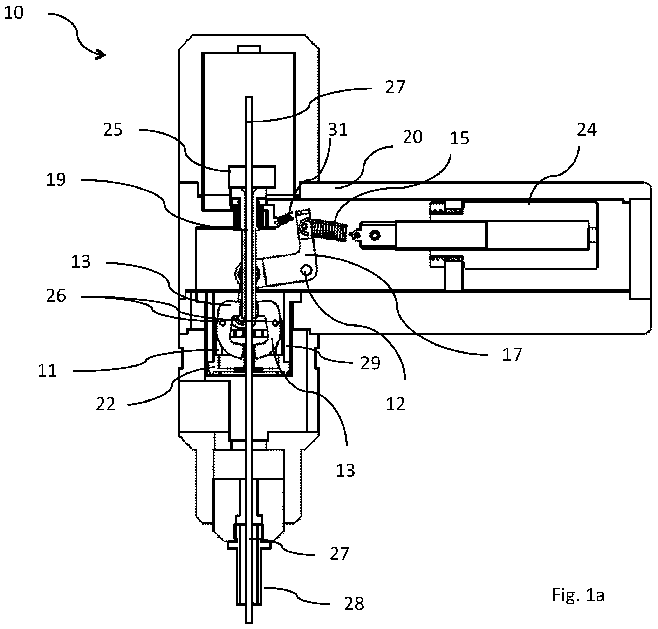

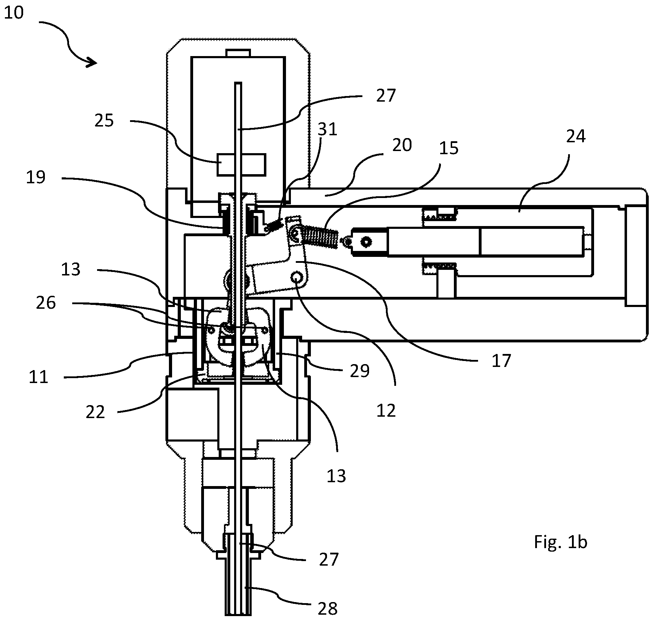

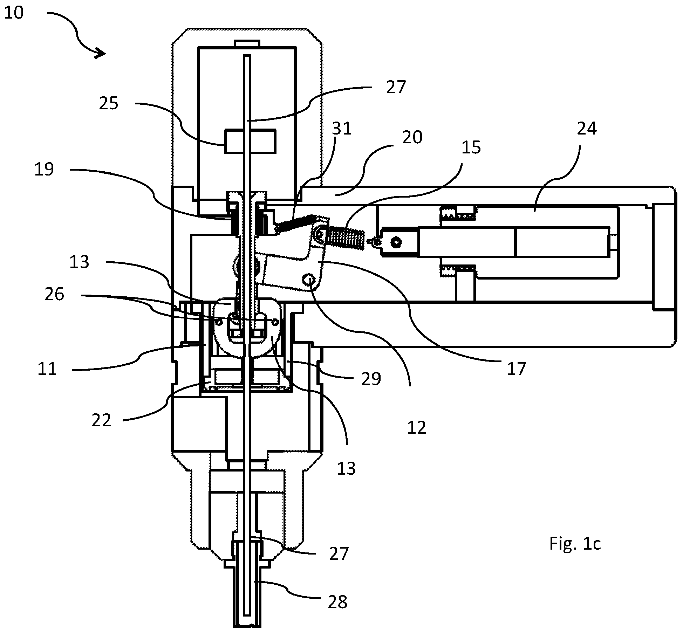

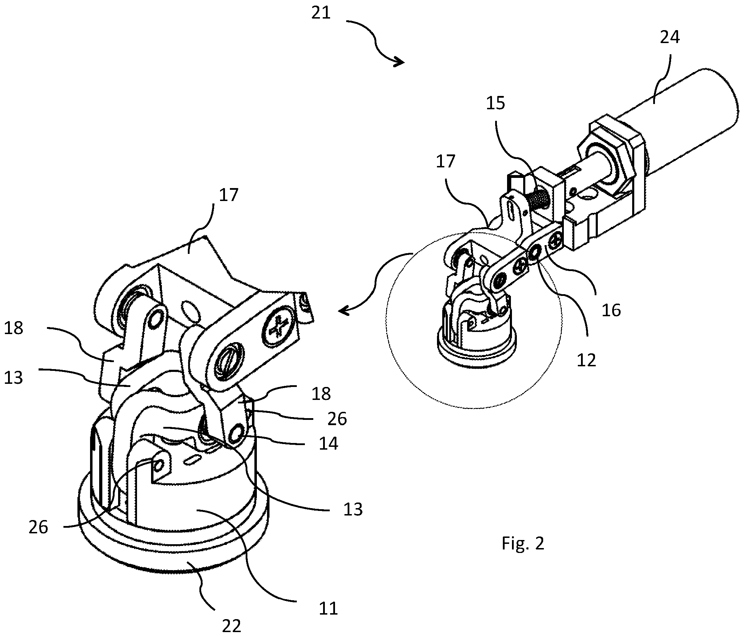

Referring to Figure 1 the touch retract Tungsten Inert Gas (TIG) torch 10 comprises a housing 20 containing a solenoid 24 for tensioning and releasing a spring 15 to activate and deactivate a retract mechanism 21(Figure 2) in order to retract and release an electrode 27.

Figure 2 shows the retract mechanism 21 comprising a swing arm 17, gripper arms 13 and a piston 11. The swing arm 17 pivots about base 16 by parallel pins forming a pivot point 12 located near to an elbow of the swing arm 17.

The spring 15 connects a first portion of the swing arm to the solenoid 24 such that when the solenoid is activated the spring is extended and the swing arm 17 rotates about the pivot point 12.

The swing arm 17 is connected via pull arms 18 and respective mounting pins 14 to a pair of gripper arms 13 which extend within a piston 11. The gripper arms pivot about points 26 of the piston 11.

The piston 11 is resiliently connected, via two springs 23 (not shown) to a piston lock 22 which remains stationary during the retract phase

When the swing arm 17 rotates about pivot point 12 this in turn causes the gripper arms 13 to rotate about their pivot points 26 and cause the tips of the gripper arms 13 to move toward one another in order to clamp the electrode 27.

Further rotational movement of the swing arm 17 causes the gripper arms 13, the piston 11, and the electrode 27 to move upwards as the gripper arms cannot close any further onto the electrode until a predetermined stop 19 prevents further upwards movement.

Returning to Figures 1a-1c once the weld is complete, the solenoid 24 is deactivated. Spring 15 returns to its relaxed state and a return spring 31 serves to aid swing arms17 to return to its lower position and open the gripper arms 13. Springs 23 (not shown) cooperate with the return spring 31 to return the piston 11 to its original position.

The housing 20 also supports a current return gas nozzle 28 for completing the circuit once the weld current is activated.

Figure 1a illustrates the torch 10 in a first configuration, prior to a weld being carried out. The electrode 27 extends through the current return gas nozzle 28 so that it is visible whilst the torch is being located at the weld position.

Figure 1b illustrates the torch 10 after the electrode has been located at the weld position and the torch lowered so that the electrode is pushed up within the nozzle 28 such that the electrode is flush with the nozzle and the work piece.

The current return gas nozzle 28 may then be used to exert pressure on the weld site in order to maintain mechanical contact between the pieces to be welded during the weld process.

Figure 1c illustrates the torch after the retract mechanism has been activated during the weld process.

Figures 3 to 9 illustrate individual parts of the touch retract torch in further detail. The process of performing a touch retract weld using the torch of the present invention will now be described with reference to Figures 10 to 12 as well as Figures 1a-1c .

Before commencing a weld the electrode 27 protrudes from the current return gas nozzle 28 so that the torch 10 can be easily positioned to locate the electrode 27 at the desired weld position. According to the present invention, a copper block 25 attached to the top of the electrode 27 abuts the top of stop 19 to set the maximum distance that the electrode 27 can protrude.

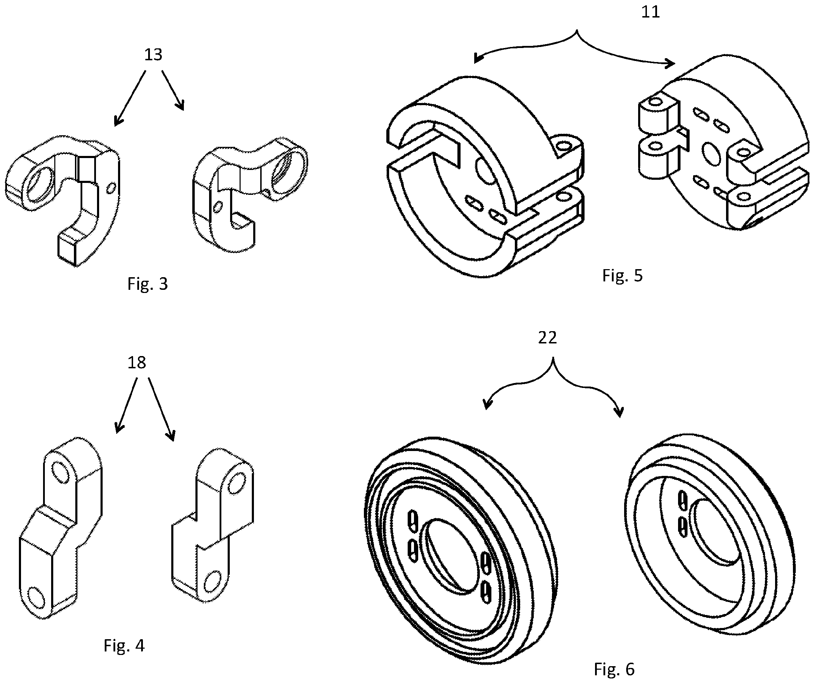

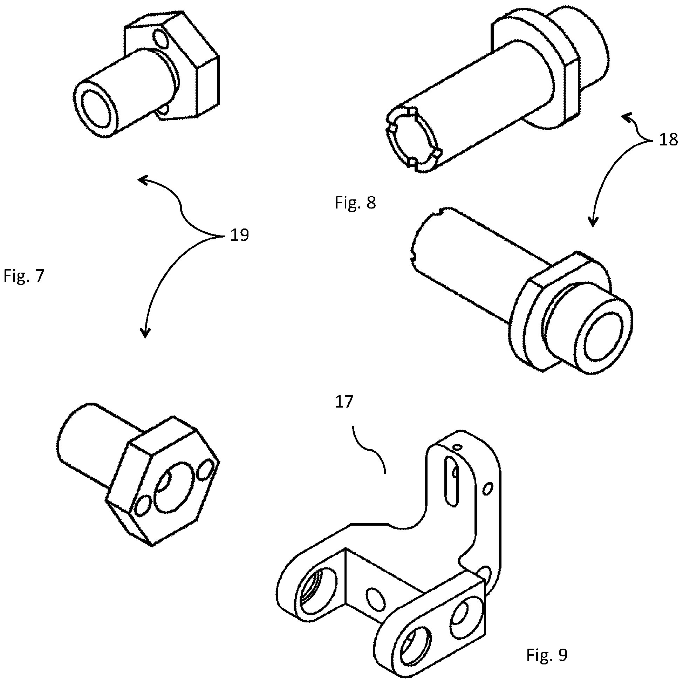

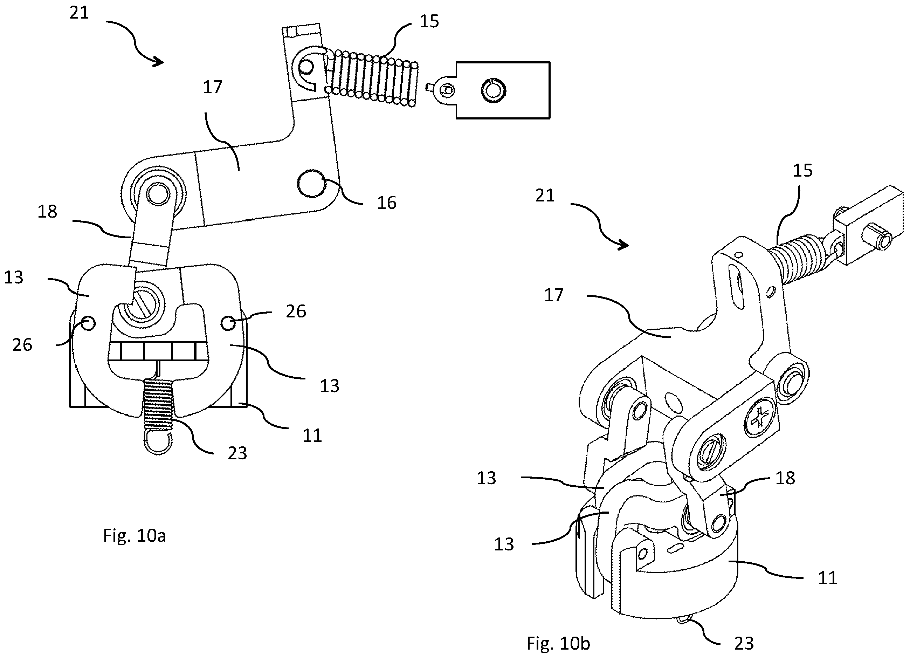

The retract mechanism 21 is shown in the initial relaxed/open configuration in Figure 10a and10b. The spring 15 is un-tensioned, swing arm 17 (shown in isolation in Figure 9) is angled slightly downward and gripper arms 13 (shown in isolation in Figure 3) are open. The piston 11 (shown in isolation in Figure 5) is linked by a pair of piston springs 23 to the piston lock 22 (not shown here, shown in isolation in Figure 6) such that they are pulled closed together.

As previously shown in Figure 1b once the electrode is located on the weld site the torch 10 continues to be lowered, thus the electrode 27 is pushed upwards through the open gripper arms until the current return gas nozzle 28 surrounds the weld site and the electrode 27 is no longer visible.

When the torch 10, electrode 27 and nozzle 28 are in place the weld sensing current is now ready to be applied to the electrode. When this happens, a short circuit current starts to flow which is readily detected and used as a trigger to drive the retract solenoid 24 in the torch. Activating the solenoid 24 immediately causes the retract mechanism 21 to engage and lift the gripper arms 13 and thus the electrode 27 is retracted to draw an electric arc therefore creating the weld. Gas flow can be channelled around the electrode. In the preferred embodiment, there are castellations in the gas nozzle/return electrode to allow the gas to exit.

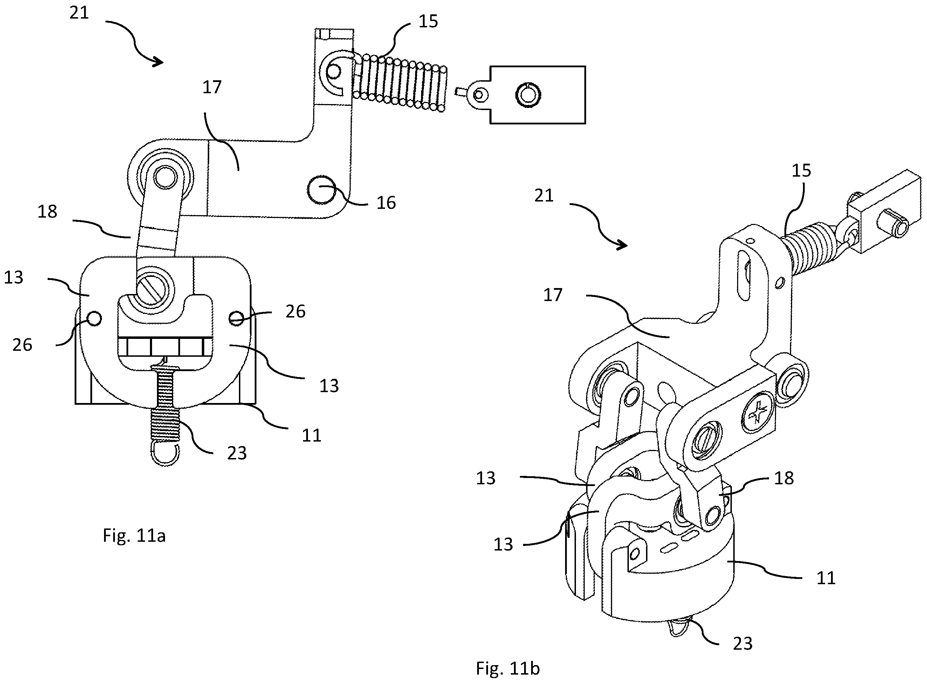

Figure 11a and 11b illustrate the retract mechanism 21 now in the retracted or closed configuration. The spring 15 is tensioned, swing arm 17 is pulled upwards and gripper arms 13 are closed. The piston 11 linked by a pair of springs 23 to the piston lock 22 (not shown, and which cannot move) which can move apart.

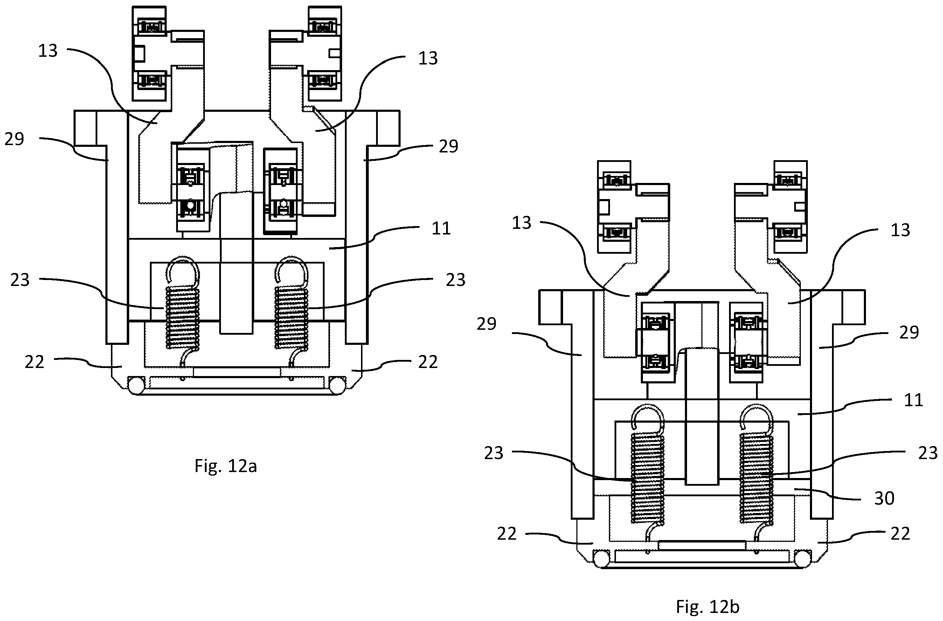

In order to understand the way in which the piston 11, springs 23 and piston lock 22 cooperate during the retraction operation, Figures 12a and 12b show a cross section perpendicular to those of Figures 10a and 11a of the retract mechanism in the open/relaxed and closed/gripping configuration. The piston 11 and piston lock are housed in a piston housing 29. When the gripper arms 13 are raised by the swing arm 17 (not shown) they rotate about the gripper arm pivot points 26 (not shown) and also urge the piston 11 upwards. The piston 11 is resiliently connected to the piston lock 22 by a pair of springs 23. However, the piston lock 22 is prevented from moving upwards by piston housing 29. Therefore as well as the gripper arms 13 pivoting and lifting slightly proud of the piston housing 29, the piston 11 is pulled away from the piston lock 22 to leave a small gap 30 (Figure 12b) until the piston 11 is prevented from further upwards movement by stop 19 (Figures 1a-1c). Figures 13a and 13b illustrate the movement between the piston 11 and the piston lock 22 more clearly.

Due to the presence of the stop 19, the electrode is retracted by exactly the same distance for every weld. In the preferred embodiment, this distance is approximately 1mm. In general, electrodes experience wear during use and become shorter. However, due to the fact the gripper arms 13 are only engaged once the electrode is touching the weld site, then the electrode 27 is retracted a fixed distance each time due to the stop 19, such wear does not affect the distance the electrode is retracted during the weld process, thus resulting in consistent welds throughout the life of the electrode.

Current flow is maintained while pressure is applied downwards until the weld pulse ends. Once the weld is completed, the solenoid 24 is deactivated and the piston 11 returns to its original position as described above.

It will be understood that positional terms in the description above relate to operation of the torch in a substantially upright orientation in which the torch is lowered onto the desired weld site. It will be appreciated that the torch can be operated in any desired orientation such as in a horizontal plane or may even be raised toward a weld site and any positional terms should be understood in this context.

## Claims

1. A touch retract tungsten inert gas (TIG) arc welding torch (10) comprising:
an electrode (27);
a nozzle (28), the nozzle surrounding the electrode (27), wherein in a first configuration the electrode (27) protrudes from the nozzle (28), and in a second configuration the ends of the electrode (27) and the nozzle (28) are co-planar to concurrently touch, in use, the weld site;
a mechanical retraction mechanism (21) configured to retract the electrode (27) away from said weld site by a predetermined distance to draw an electric arc between said retracted electrode (27) and said weld site in order to create the weld;
an activating means (24) arranged in operation to trigger the retraction mechanism (21);
wherein the retraction mechanism (21), when triggered by the activating means (24), is configured, in use, first to engage and clamp said mobile electrode (27) in the second configuration and then to retract said clamped electrode away from the weld site whereby the end of the electrode is withdrawn by said predetermined distance to draw said electric arc;
**characterised in that** the mechanical retraction mechanism comprises gripper arms (13) configured to engage and clamp the electrode (27) when the end of the electrode is withdrawn away from said weld site and to disengage and release the electrode (27), in which, when the gripper arms (13) are not engaged the electrode (27) is slidable between the first configuration so that the end of the electrode (27) protrudes from the end of the nozzle (28) before commencing a weld to allow a user of the torch to view and easily locate the electrode at a desired weld position and the second configuration so that the end of the electrode (27) and the end of the nozzle (28) are co-planar such that, in use, the end of the electrode and the end of the nozzle concurrently touch said weld site; and
the torch further comprises a copper block (25) attached to a top of the electrode (27), said block abutting the top of a stop (19) in order to set a maximum distance of said protrusion.

2. A touch retract arc welding torch (10) according to claim 1, in which the mechanical retraction mechanism (21) further comprises a piston (11) through which the electrode (27) extends, the gripper arms (13) being pivotally attached to an end of the piston (11) such that rotation of the gripper arms (13) about a pivot point (26) causes the gripper arms (13) to engage and clamp the electrode (27).

3. A touch retract arc welding torch (10) according to claim 2 in which the piston (11) is resiliently attached to a piston lock (22) and in which the piston lock (22) remains stationery as the gripper arms (13) pivot and retract the piston (11) together with the gripper arms (13) thus increasing a frictional force between the gripper arms (13) and the electrode (27).

4. A touch retract arc welding torch (10) according to claim 2 or claim 3, in which the mechanical retraction mechanism (21) further comprises a swing arm (17) connected to an end of each of the gripper arms (13) and resiliently connected to the activating means (24) and in which the activating means (24) triggers the retraction mechanism (21) by pivoting the swing arm (17) from an unengaged position to an engaged position causing the gripper arms (13) to pivot and engage and clamp the electrode (27), and in which further pivoting of the swing arm (13) retracts the piston (11) together with the gripper arms (13) and hence the electrode (27).

5. A touch retract arc welding torch according to claim 4 further comprising a return spring (31) arranged to return the swing arm (13) to the unengaged position.

6. A touch retract arc welding torch according to any one of claims 2 to 5, in which a stop (19) prevents the piston (11) from retracting beyond said predetermined distance.

7. A touch retract arc welding torch according to any one of the preceding claims, in which the activating means (24) is a solenoid.

8. A touch retract arc welding torch according to any one of the preceding claims, in which the activating means (24) is a linear motion actuator.

9. A touch retract arc welding torch according to any one of the preceding claims, in which the activating means is a pneumatic or hydraulic cylinder actuator.

10. A method of using a touch retract tungsten inert gas (TIG) arc welding torch (10) to weld a work piece, the torch comprising:
an electrode (27);
a nozzle (28), the nozzle surrounding the electrode (27) and the nozzle and the electrode each having an end;
a mechanical retraction mechanism (21) configured to retract the electrode (27) away from a weld site by a predetermined distance to draw an electric arc between said retracted electrode (27) and said weld site in order to create the weld, the mechanical retraction mechanism (21) comprising gripper arms (13) configured to engage and clamp the electrode (27) and to disengage and release the electrode (27); and
an activating means (24) arranged in operation to trigger the retraction mechanism (21);
**characterised in that** the method comprises:
- disengaging and releasing the gripper arms (13) from the electrode (27) so that the electrode is slidable between a first configuration in which the end of the electrode (27) protrudes from the end of the nozzle (28) to allow a user of the torch to view and easily locate the electrode at a desired weld position and a second configuration in which the end of the electrode (27) and the end of the nozzle (28) are co-planar, a maximum distance of said protrusion being set by a copper block (25) attached to a top of the electrode (27) when said block abuts the top of a stop (19);
- bringing the end of the nozzle into contact with the weld site of the work piece with the end of the electrode (27) at a desired position of the weld site, said mobile electrode sliding until the end of the electrode (27) and the end of the nozzle (28) are co-planar; and
- using the activation means (24) to trigger the retraction mechanism (21) thereby causing the gripper arms (13) first to engage and clamp the electrode in the second configuration and then to retract said clamped electrode away from the weld site whereby the end of the electrode is withdrawn by said predetermined distance to draw said electric arc between said withdrawn electrode end and the weld site in order to create the weld.

## Patentansprüche

1. Beim Kontakt einziehbarer Wolfram-Inertgas (WIG)-Lichtbogenschweißbrenner (10), der Folgendes umfasst:
- eine Elektrode (27);
- eine Düse (28), welche die Elektrode (27) umgibt, wobei in einer ersten Konfiguration die Elektrode (27) aus der Düse (28) herausragt und in einer zweiten Konfiguration die Enden der Elektrode (27) und der Düse (28) koplanar sind, um im Gebrauch die Schweißstelle gleichzeitig zu berühren;
- ein mechanischer Einziehmechanismus (21), der dazu ausgebildet ist, die Elektrode (27) um eine vorbestimmte Distanz von der Schweißstelle weg einzuziehen, um zwischen der eingezogenen Elektrode (27) und der Schweißstelle einen Lichtbogen zu ziehen, um die Schweißverbindung zu erzeugen;
- ein Aktivierungsmittel (24), das dazu ausgelegt ist, im Betrieb den Einziehmechanismus (21) auszulösen;
wobei der Einziehmechanismus (21) dann, wenn er durch das Aktivierungsmittel (24) ausgelöst ist, dazu ausgebildet ist, im Gebrauch zunächst die bewegliche Elektrode (27) in der zweiten Konfiguration zu greifen und festzuklemmen und die festgeklemmte Elektrode dann von der Schweißstelle weg einzuziehen, wodurch das Ende der Elektrode um die vorbestimmte Distanz zurückgezogen wird, um den Lichtbogen zu ziehen;
**dadurch gekennzeichnet, dass** der mechanische Einziehmechanismus Greifarme (13) umfasst, die dazu ausgebildet sind, die Elektrode (27) zu greifen und festzuklemmen, wenn das Ende der Elektrode von der Schweißstelle weg zurückgezogen wird, und die Elektrode (27) auszuklinken und zu lösen, wobei dann, wenn die Greifarme (13) nicht eingeklinkt sind, die Elektrode (27) zwischen der ersten Konfiguration verschiebbar ist, sodass das Ende der Elektrode (27) aus dem Ende der Düse (28) herausragt, bevor mit einem Schweißvorgang begonnen wird, damit ein Benutzer des Schweißbrenners die Elektrode sehen kann und die Elektrode leicht an einer gewünschten Schweißposition und in der zweiten Konfiguration so positionieren kann, dass das Ende der Elektrode (27) und das Ende der Düse (28) koplanar sind, sodass im Gebrauch das Ende der Elektrode und das Ende der Düse gleichzeitig die Schweißstelle berühren; und
dass der Schweißbrenner ferner einen Kupferblock (25) umfasst, der an einem oberen Ende der Elektrode (27) befestigt ist, wobei der Block oben an einem Anschlag (19) anstößt, um einen maximalen Abstand des Vorsprungs einzustellen.

2. Beim Kontakt einziehbarer Lichtbogenschweißbrenner (10) nach Anspruch 1, bei dem der mechanische Einziehmechanismus (21) ferner einen Kolben (11) umfasst, durch den sich die Elektrode (27) erstreckt, wobei die Greifarme (13) schwenkbar an einem Ende des Kolbens (11) befestigt sind, sodass die Drehung der Greifarme (13) um einen Drehpunkt (26) bewirkt, dass die Greifarme (13) die Elektrode (27) greifen und festklemmen.

3. Beim Kontakt einziehbarer Lichtbogenschweißbrenner (10) nach Anspruch 2, bei dem der Kolben (11) federnd an einem Kolbenschloss (22) befestigt ist, und bei dem das Kolbenschloss (22) unbeweglich bleibt, wenn die Greifarme (13) den Kolben (11) zusammen mit den Greifarmen (13) drehen und zurückziehen, sodass eine Reibungskraft zwischen den Greifarmen (13) und der Elektrode (27) erhöht wird.

4. Beim Kontakt einziehbarer Lichtbogenschweißbrenner (10) nach Anspruch 2 oder 3, bei dem der mechanische Einziehmechanismus (21) ferner einen Schwenkarm (17) umfasst, der mit einem Ende eines jeden der Greifarme (13) verbunden ist und elastisch mit dem Aktivierungsmittel (24) verbunden ist, und bei dem das Aktivierungsmittel (24) den Einziehmechanismus (21) auslöst, indem es den Schwenkarm (17) von einer ausgeklinkten Position in eine eingeklinkte Position schwenkt, sodass die Greifarme (13) verschwenkt werden und die Elektrode (27) greifen und festklemmen, und bei dem durch weiteres Verschwenken des Schwenkarms (13) der Kolben (11) zusammen mit den Greifarmen (13) und damit die Elektrode (27) zurückgezogen wird.

5. Beim Kontakt einziehbarer Lichtbogenschweißbrenner nach Anspruch 4, der fermer eine Rückstellefeder (31) umfasst, die dazu ausgelegt ist, den Schwenkarm (13) in die ausgeklinkte Position zurückzustellen.

6. Beim Kontakt einziehbarer Lichtbogenschweißbrenner nach einem der Ansprüche 2 bis 5, bei dem ein Anschlag (19) verhindert, dass der Kolben (11) über die vorbestimmte Distanz hinaus zurückgezogen wird.

7. Beim Kontakt einziehbarer Lichtbogenschweißbrenner nach einem der vorhergehenden Ansprüche, bei dem das Aktivierungsmittel (24) ein Elektromagnet ist.

8. Beim Kontakt einziehbarer Lichtbogenschweißbrenner nach einem der vorhergehenden Ansprüche, bei dem das Aktivierungsmittel (24) ein Linearbewegungsaktuator ist.

9. Beim Kontakt einziehbarer Lichtbogenschweißbrenner nach einem der vorhergehenden Ansprüche, bei dem das Aktivierungsmittel ein pneumatischer oder hydraulischer Stellzylinder ist.

10. Verfahren zur Verwendung eines beim Kontakt einziehbaren Wolfram-Inertgas (WIG)-Lichtbogenschweißbrenners (10) zum Schweißen eines Werkstücks, wobei der Schweißbrenner Folgendes umfasst:
- eine Elektrode (27);
- eine Düse (28), wobei die Düse die Elektrode (27) umgibt und die Düse und die Elektrode jeweils ein Ende besitzen;
- einen mechanischen Einziehmechanismus (21), der dazu ausgebildet ist, die Elektrode (27) um eine vorbestimmte Distanz von der Schweißstelle weg zurückzuziehen, um zwischen der eingezogenen Elektrode (27) und der Schweißstelle einen Lichtbogen zu ziehen, um die Schweißverbindung zu erzeugen, wobei der mechanische Einziehmechanismus (21) Greifarme (13) umfasst, die dazu ausgebildet sind, die Elektrode (27) zu greifen und festzuklemmen und die Elektrode (27) auszuklinken und zu lösen; und;
- ein Aktivierungsmittel (24), das dazu ausgelegt ist, im Betrieb den Einziehmechanismus (21) auszulösen;
**dadurch gekennzeichnet, dass** das Verfahren die folgenden Schritte umfasst:
- Ausklinken und Lösen der Greifarme (13) von der Elektrode (27), sodass die Elektrode zwischen einer ersten Konfiguration, bei der das Ende der Elektrode (27) aus dem Ende der Düse (28) herausragt, damit ein Benutzer des Schweißbrenners die Elektrode sehen und leicht an einer gewünschten Schweißposition positionieren kann, und einer zweiten Konfiguration, bei der das Ende der Elektrode (27) und das Ende der Düse (28) koplanar sind, verschiebbar ist, wobei ein maximaler Abstand des Vorsprungs durch einen an einem oberen Ende der Elektrode (27) befestigten Kupferblock (25) eingestellt wird, wenn der Block oben an den Anschlag (19) stößt;
- In-Kontakt-Bringen des Endes der Düse mit der Schweißstelle des Werkstücks, sodass sich das Ende der Elektrode (27) an einer gewünschten Position der Schweißstelle befindet, wobei die bewegliche Elektrode gleitet, bis das Ende der Elektrode (27) und das Ende der Düse (28) koplanar sind; und
- Auslösen des Einziehmechanismus' (21) mit Hilfe des Aktivierungsmittels (24), wodurch die Greifarme (13) in der zweiten Konfiguration zunächst die Elektrode greifen und festklemmen und dann die festgeklemmte Elektrode von der Schweißstelle weg zurückziehen, wodurch das Ende der Elektrode um die vorbestimmte Distanz zurückgezogen wird, um den Lichtbogen zwischen der zurückgezogenen Elektrode und der Schweißstelle zu ziehen, um die Schweißverbindung zu erzeugen.

## Revendications

1. Torche de soudage à l'arc au gaz inerte au tungstène (TIG) à rétraction par contact (10) comprenant :
une électrode (27) ;
une buse (28), la buse entourant l'électrode (27), dans une première configuration l'électrode (27) faisant saillie à partir de la buse (28), et dans une seconde configuration les extrémités de l'électrode (27) et de la buse (28) étant coplanaires pour toucher simultanément, en utilisation, le site de soudure ;
un mécanisme de rétraction mécanique (21) configuré pour rétracter l'électrode (27) à l'opposé dudit site de soudure, d'une distance prédéterminée, pour tirer un arc électrique entre ladite électrode (27) rétractée et ledit site de soudure afin de créer la soudure ;
un moyen d'activation (24) agencé pour, en fonctionnement, déclencher le mécanisme de rétraction (21) ;
le mécanisme de rétraction (21), lorsqu'il est déclenché par le moyen d'activation (24), étant configuré, en utilisation, tout d'abord pour engager et serrer ladite électrode mobile (27) dans la seconde configuration, puis pour rétracter ladite électrode serrée à l'opposé du site de soudure, ce par quoi l'extrémité de l'électrode est retirée de ladite distance prédéterminée pour tirer ledit arc électrique ;
**caractérisée par le fait que** le mécanisme de rétraction mécanique comprend des bras de saisie (13) configurés pour engager et serrer l'électrode (27) lorsque l'extrémité de l'électrode est retirée dudit site de soudure, et pour désengager et libérer l'électrode (27), lorsque les bras de saisie (13) ne sont pas engagés l'électrode (27) étant apte à coulisser entre la première configuration, de telle sorte que l'extrémité de l'électrode (27) fait saillie à partir de l'extrémité de la buse (28) avant de commencer une soudure pour permettre à un utilisateur de la torche de voir et de placer aisément l'électrode à une position de soudure souhaitée, et la seconde configuration, de telle sorte que l'extrémité de l'électrode (27) et l'extrémité de la buse (28) sont coplanaires de telle sorte qu'en utilisation l'extrémité de l'électrode et l'extrémité de la buse touchent simultanément ledit site de soudure ; et
la torche comprend en outre un bloc de cuivre (25) fixé à la partie supérieure de l'électrode (27), ledit bloc venant en butée contre la partie supérieure d'une butée (19) afin de définir une distance maximale de ladite saillie.

2. Torche de soudage à l'arc à rétraction par contact (10) selon la revendication 1, dans laquelle le mécanisme de rétraction mécanique (21) comprend en outre un piston (11) à travers lequel l'électrode (27) s'étend, les bras de saisie (13) étant fixés de manière pivotante à une extrémité du piston (11) de telle sorte qu'une rotation des bras de saisie (13) autour d'un point de pivotement (26) amène les bras de saisie (13) à engager et serrer l'électrode (27).

3. Torche de soudage à l'arc à rétraction par contact (10) selon la revendication 2, dans laquelle le piston (11) est fixé de manière élastique à un verrou de piston (22) et dans laquelle le verrou de piston (22) reste fixe alors que les bras de saisie (13) pivotent et rétractent le piston (11) conjointement avec les bras de saisie (13), augmentant ainsi une force de frottement entre les bras de saisie (13) et l'électrode (27).

4. Torche de soudage à l'arc à rétraction par contact (10) selon la revendication 2 ou la revendication 3, dans laquelle le mécanisme de rétraction mécanique (21) comprend en outre un bras oscillant (17) relié à une extrémité de chacun des bras de saisie (13) et relié de manière élastique au moyen d'activation (24), et dans laquelle le moyen d'activation (24) déclenche le mécanisme de rétraction (21) par pivotement du bras oscillant (17) d'une position non engagée à une position engagée amenant les bras de saisie (13) à pivoter et engager et serrer l'électrode (27), et dans laquelle un autre pivotement du bras oscillant (17) rétracte le piston (11) conjointement avec les bras de saisie (13) et donc l'électrode (27).

5. Torche de soudage à l'arc à rétraction par contact selon la revendication 4, comprenant en outre un ressort de rappel (31) agencé pour ramener le bras oscillant (13) à la position non engagée.

6. Torche de soudage à l'arc à rétraction par contact selon l'une quelconque des revendications 2 à 5, dans laquelle une butée (19) empêche le piston (11) de se rétracter au-delà de ladite distance prédéterminée.

7. Torche de soudage à l'arc à rétraction par contact selon l'une quelconque des revendications précédentes, dans laquelle le moyen d'activation (24) est un solénoïde.

8. Torche de soudage à l'arc à rétraction par contact selon l'une quelconque des revendications précédentes, dans laquelle le moyen d'activation (24) est un actionneur à mouvement linéaire.

9. Torche de soudage à l'arc à rétraction par contact selon l'une quelconque des revendications précédentes, dans laquelle le moyen d'activation est un actionneur à vérin hydraulique ou pneumatique.

10. Procédé d'utilisation d'une torche de soudage à l'arc au gaz inerte au tungstène (TIG) à rétraction par contact (10) pour souder une pièce de travail, la torche comprenant :
une électrode (27) ;
une buse (28), la buse entourant l'électrode (27), et la buse et l'électrode ayant chacune une extrémité ;
un mécanisme de rétraction mécanique (21) configuré pour rétracter l'électrode (27) à l'opposé d'un site de soudure, d'une distance prédéterminée, pour tirer un arc électrique entre ladite électrode (27) rétractée et ledit site de soudure afin de créer la soudure, le mécanisme de rétraction mécanique (21) comprenant des bras de saisie (13) configurés pour engager et serrer l'électrode (27) et pour désengager et libérer l'électrode (27) ; et
un moyen d'activation (24) agencé pour, en fonctionnement, déclencher le mécanisme de rétraction (21) ;
**caractérisé par le fait que** le procédé comprend :
- désengager et libérer les bras de saisie (13) vis-à-vis de l'électrode (27) de telle sorte que l'électrode est apte à coulisser entre une première configuration, dans laquelle l'extrémité de l'électrode (27) fait saillie à partir de l'extrémité de la buse (28) pour permettre à un utilisateur de la torche de voir et de placer aisément l'électrode à une position de soudure souhaitée, et une seconde configuration, dans laquelle l'extrémité de l'électrode (27) et l'extrémité de la buse (28) sont coplanaires, une distance maximale de ladite saillie étant définie par un bloc de cuivre (25) fixé à une partie supérieure de l'électrode (27) lorsque ledit bloc vient en butée contre la partie supérieure d'une butée (19) ;
- amener l'extrémité de la buse en contact avec le site de soudure de la pièce de travail, avec l'extrémité de l'électrode (27) à une position souhaitée du site de soudure, ladite électrode mobile coulissant jusqu'à ce que l'extrémité de l'électrode (27) et l'extrémité de la buse (28) soient coplanaires ; et
- utiliser le moyen d'activation (24) pour déclencher le mécanisme de rétraction (21), amenant ainsi les bras de saisie (13) tout d'abord à engager et serrer l'électrode dans la seconde configuration, puis à rétracter ladite électrode serrée à l'opposé du site de soudure, ce par quoi l'extrémité de l'électrode est retirée de ladite distance prédéterminée pour tirer ledit arc électrique entre ladite extrémité d'électrode retirée et le site de soudure afin de créer la soudure.
